# EUROPEAN PATENT SPECIFICATION

(11) **EP 4 410 618 B1**
(45) Date of publication and mention of the grant of the patent: **31.12.2025**
(21) Application number: 22875058.4
(22) Date of filing: 29.09.2022
(51) Int. Cl.: B60W 10/06, B60W 10/08, B60W 20/15, B60W 30/188

(54) **VEHICLE CONTROL METHOD, STORAGE MEDIUM, AND ELECTRONIC DEVICE**
FAHRZEUGSTEUERUNGSVERFAHREN, SPEICHERMEDIUM UND ELEKTRONISCHE VORRICHTUNG
PROCÉDÉ DE COMMANDE DE VÉHICULE, SUPPORT DE STOCKAGE, ET DISPOSITIF ÉLECTRONIQUE

(30) Priority: 30.09.2021 CN 202111164068
(43) Date of publication of application: 07.08.2024
(73) Proprietor: Great Wall Motor Company Limited, Hebei 071000 (CN)
(72) Inventor: CHAI, Guoyao, Baoding, Hebei 071000 (CN); SONG, Haijun, Baoding, Hebei 071000 (CN); ZHOU, Bo, Baoding, Hebei 071000 (CN)
(74) Representative: Klunker IP Patentanwälte PartG mbB
(86) International application number: PCT/CN2022/122518
(87) International publication number: WO 2023/051676

(56) References cited:
- CN-A- 103 863 305
- CN-A- 107 031 452
- CN-A- 108 058 617
- CN-A- 111 791 874
- CN-A- 112 537 288
- CN-A- 112 537 292
- CN-A- 113 071 329
- CN-A- 114 954 416
- CN-B- 103 248 281
- US-A1- 2013 006 456
- US-A1- 2014 163 794
- US-A1- 2021 086 749
- US-A1- 2021 229 654

## Description

### TECHNICAL FIELD

The present invention relates to the field of vehicle control technology, and in particular to a vehicle control method, a storage medium and an electronic device.

### BACKGROUND

The vehicle's engine has a maximum speed limit for the engine defined at the time of hardware design, i.e., the maximum speed that the engine can withstand. If the engine continues to work above the maximum speed, a certain impact on the service life of the engine hardware will be resulted.

In the existing technology, when an engine speed is greater than or equal to a preset speed threshold, an active fuel cutoff protection strategy will be implemented by the vehicle, that is, to limit or even cut off the fuel feeding to the engine according to the actual engine speed, so as to reduce the engine speed.

However, in a case of a driver stepping on an accelerator pedal to a large extent, even if the engine's active fuel cutoff protection strategy is implemented by the vehicle, the engine speed may continue to rise, thus affecting the lifetime of the engine.
CN 103 248 281 B discloses an electric vehicle overspeed protection control method, corresponding electric vehicle overspeed protection control system and a corresponding electric vehicle, wherein, when the current rotation speed of the motor reaches a preset protection rotation speed, a reverse torque that can actively decelerate the motor is obtained according to the current rotation speed of the motor and the current vehicle speed, and by applying the reverse torque the tendency of the motor speed to increase is reduced, thereby reducing the motor speed.
CN 107 031 452 A discloses a motor control method and device, wherei the method comprises the steps of: obtaining the current rotation speed of a motor; according to the current rotation speed and a plurality of preset rotation speed ranges, determining the rotation speed range to which the current rotation speed belongs; and controlling the power limitation of the motor according to the rotation speed range to which the current rotation speed belongs.
CN 108 058 617 A discloses a motor overspeed processing method, a corresponding complete vehicle controller and a corresponding vehicle, wherein the method comprises the steps that: the current motor rotating speed of a motor is detected; the current motor rotation speed is compared with at least one preset overspeed range, when the current motor rotation speed is in one of the preset overspeed ranges, and the duration reaches the scheduled time, a rotation speed control mode corresponding to the current motor rotating speed is determined according to the preset corresponding relation between multiple preset overspeed ranges and thecorresponding rotating speed control modes, and the rotating speed control mode corresponding to the current motor rotating speed is determined; the rotating speed control mode is adopted for controlling the current motor rotating speed to reach the preset working range.

### SUMMARY

### Technical problem

One objective of the present invention is to provide a vehicle control method, a storage medium and an electronic device.

### Solutions to the problem

The object is solved regarding the method with the features of independent claim 1, regarding the storage medium with the features of independent claim 8, and regarding the electronic device with the features of independent claim 9. Further embodiments are defined in the respective dependent claims.

### Beneficial effects of the invention

By adopting this technical solution, the output torque of the motor is adjusted according to the difference when the difference between the engine speed and the maximum speed meets the preset condition, thus the increase of the shaft speed of the vehicle is limited to avoid the speed of the engine being driven up, such that an actual engine speed is prevented from exceeding the maximum speed that the engine can withstand, which thus can effectively protect the engine, and is conducive to prolonging the service life of the engine, and improving the user's experience.

Beneficial effects provided by the present invention in the second and third aspects are the same as the beneficial effects in the above-mentioned first aspect. For details, please refer to the beneficial effects of the above-mentioned first aspect.

### BRIEF DESCRIPTION OF THE DRAWINGS

In order to explain the technical solutions of the present invention more clearly, the drawings needed to be used in the description will be briefly introduced below.
FIG. 1 is a flow chart of a vehicle control method;
FIG. 2 is a flow chart of a vehicle control method;
FIG. 3 is a flow chart of a vehicle control method;
FIG. 4 is a block diagram of a vehicle control device;
FIG. 5 is a block diagram of a vehicle control device;
FIG. 6 is a block diagram of an electronic device; and
FIG. 7 is a block diagram of a vehicle.

### DETAILED DESCRIPTION

In order to make the purpose, technical solutions and advantages of the present invention much clearer, the present invention will be further described in detail below with reference to the drawings.

The terms "first" and "second" are only used for descriptive purposes and cannot be understood as indicating or implying relative importance or implicitly indicating the number of technical features. The phrase "a/the plurality of" means two or more, unless otherwise expressly and specifically limited.

First, the application scenario of the present invention is explained. The present invention may be applied to a vehicle control scenario. In this scenario, the vehicle's engine is running at a high speed. The engine speed, if not restricted, is likely to exceed the maximum speed that the engine can withstand, which then will result in a certain damage to the engine hardware and affect the service life of the engine.

In the existing technology, some approaches are applied to prevent the engine speed from exceeding the maximum speed that the engine can withstand, such as the active fuel cutoff protection strategy. In this strategy, the fuel feeding to the engine will be limited or even cut off based on the actual engine speed to reduce the engine speed.

However, the following situation may occur in hybrid vehicles. For a vehicle equipped with P2 hybrid architecture or P2P4 hybrid architecture, during an actual driving process of the vehicle, if a higher driving torque is required by a driver, the driver will depress an accelerator pedal to a greater extent, but the transmission does not shift gears, which will cause an output torque of a motor of the vehicle to increase, and then drive the engine speed to increase. As a result, the engine speed will still exceed the maximum speed after the engine's fuel feeding is limited or even cut off.

To solve the above problem, the present invention provides a vehicle control method, where the output torque of the motor is limited based on a difference between the engine speed and the maximum speed when the difference between the engine speed and the maximum speed meets a preset condition, this ensures that the engine will not be dragged to cause the speed to exceed the maximum speed.

The present invention will be described below.

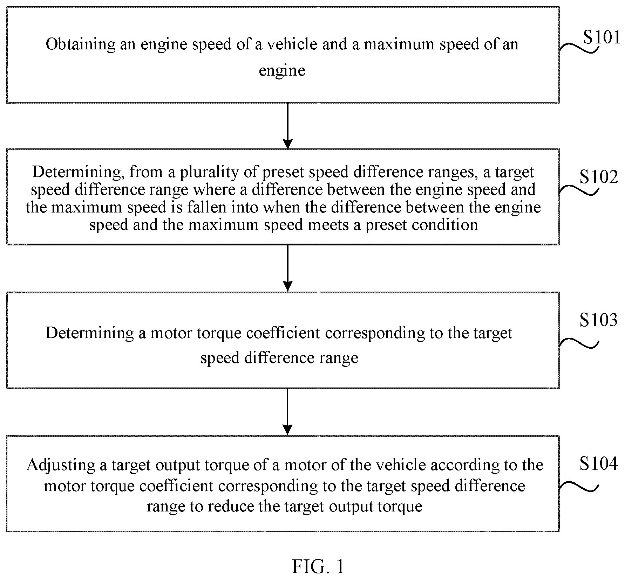

FIG. 1 shows a vehicle control method provided by the present invention. As shown in FIG. 1, the vehicle control method includes steps of S101 to S104.

In step S101, an engine speed of a vehicle and a maximum speed of an engine are obtained.

Here, the engine speed may be obtained through a speed sensor, the speed sensor may be arranged at a crankshaft position of the vehicle. The maximum speed of the engine may be the maximum speed that the engine can withstand without affecting its service life, the maximum speed of the engine may be obtained through the engine itself.

In step S102, a target speed difference range where a difference between the engine speed and the maximum speed is fallen into is determined from a plurality of preset speed difference ranges when the difference (i.e. the above speed difference) between the engine speed and the maximum speed meets a preset condition.

The preset condition represents a tendency of the engine speed to exceed the maximum speed. In here, in case that the difference between the engine speed and the maximum speed is a difference obtained by subtracting the engine speed from the maximum speed, then the preset condition includes that the difference obtained by subtracting the engine speed from the maximum speed is smaller than or equal to a first preset speed difference threshold. In case that the difference between the engine speed and the maximum speed is a difference obtained by subtracting the maximum speed from the engine speed, then the preset condition includes that the difference obtained by subtracting the maximum speed from the engine speed is greater than or equal to a second preset speed difference threshold.

Taking that the difference between the engine speed and the maximum speed is the difference obtained by subtracting the engine speed from the maximum speed as an example, step S102 is introduced. A preset speed difference threshold may be a warning difference that indicates that the engine speed is close to the maximum speed that the engine can withstand. In case that the difference obtained by subtracting the engine speed from the maximum speed is smaller than or equal to the preset speed difference threshold, in order to prevent the engine speed from continuing to rise beyond the maximum speed that the engine can withstand, the target speed difference range where the engine's current speed is fallen into can be determined from the plurality of preset speed difference ranges, and then the steps of S103 to S104 are performed based on the target speed difference range. The plurality of preset speed difference ranges are used to characterize multiple stages of the engine speed.

In one possible implementation, when the engine is in a fault-free condition, the preset speed difference threshold may be 300 rpm.

By way of example, the plurality of preset speed difference ranges may be (300 rpm, 200 rpm), (200 rpm, 100 rpm), (100 rpm, 50 rpm), (50 rpm, 0 rpm) and below 0 rpm. In case that the difference obtained by subtracting the engine speed from the maximum speed is smaller than or equal to 300 rpm and greater than 200 rpm, then it is determined that the difference obtained by subtracting the engine speed from the maximum speed is within the target speed difference range of (300 rpm, 200 rpm). In case that the difference obtained by subtracting the engine speed from the maximum speed is smaller than or equal to 200 rpm and greater than 100 rpm, then it is determined that the difference obtained by subtracting the engine speed from the maximum speed is within the target speed difference range of (200 rpm, 100 rpm). In case that the difference obtained by subtracting the engine speed from the maximum speed is smaller than or equal to 100 rpm and greater than 50 rpm, then it is determined that the difference obtained by subtracting the engine speed from the maximum speed is within the target speed difference range of (100 rpm, 50 rpm). In case that the difference obtained by subtracting the engine speed from the maximum speed is smaller than or equal to 50 rpm and greater than 0 rpm, then it is determined that the difference obtained by subtracting the engine speed from the maximum speed is within the target speed difference range of (50 rpm, 0 rpm). In case that the difference obtained by subtracting the engine speed from the maximum speed is smaller than or equal to 0 rpm, then it is determined that the engine speed is above the maximum speed.

In another possible implementation, when the engine is in a fault condition, to prevent further serious engine faults, the preset speed difference threshold may be appropriately increased. For example, the preset speed difference threshold may be 500 rpm.

By way of example, the plurality of preset speed difference ranges may be (500 rpm, 300 rpm), (300 rpm, 200 rpm), (200 rpm, 100 rpm), (100 rpm, 50 rpm), (50 rpm, 0 rpm) and below 0 rpm. In case that the difference obtained by subtracting the engine speed from the maximum speed is smaller than or equal to 500 rpm and greater than 300 rpm, then it is determined that the difference obtained by subtracting the engine speed from the maximum speed is within the target speed difference range of (500 rpm, 300 rpm). In case that the difference obtained by subtracting the engine speed from the maximum speed is smaller than or equal to 300 rpm and greater than 200 rpm, then it is determined that the difference obtained by subtracting the engine speed from the maximum speed is within the target speed difference range of (300 rpm, 200 rpm). In case that the difference obtained by subtracting the engine speed from the maximum speed is smaller than or equal to 200 rpm and greater than 100 rpm, then it is determined that the difference obtained by subtracting the engine speed from the maximum speed is within the target speed difference range of (200 rpm, 100 rpm). In case that the difference obtained by subtracting the engine speed from the maximum speed is smaller than or equal to 100 rpm and greater than 50 rpm, then it is determined that the difference obtained by subtracting the engine speed from the maximum speed is within the target speed difference range of (100 rpm, 50 rpm). In case that the difference obtained by subtracting the engine speed from the maximum speed is smaller than or equal to 50 rpm and greater than 0 rpm, then it is determined that the difference obtained by subtracting the engine speed from the maximum speed is within the target speed difference range of (50 rpm, 0 rpm). In case that the difference obtained by subtracting the engine speed from the maximum speed is smaller than or equal to 0 rpm, then it is determined that the engine speed is above the maximum speed.

In case that the difference between the engine speed and the maximum speed is the difference obtained by subtracting the maximum speed from the engine speed, the corresponding descriptions are similar to the above and will not be repeated here.

It should be noted that the above-mentioned maximum speed, preset speed difference threshold and plurality of preset speed difference ranges may be preset according to different engine types and models or experimental values. The examples here are used for illustrative purposes only and are not intended to limit the present invention which is defined in the claims.

In step S103, a motor torque coefficient corresponding to the target speed difference range is determined.

Here, different preset speed difference ranges correspond to different motor torque coefficients. The motor torque coefficient is used to adjust the output torque of the motor. The motor torque coefficient corresponding to the engine speed may be obtained through a preset coefficient correspondence relation. The preset coefficient correspondence relation includes motor torque coefficients corresponding to different preset speed difference ranges.

Here, when the engine speed is smaller than the maximum speed, an interval of the preset speed difference range approaches zero as the engine speed increases. The motor torque coefficient decreases as the interval of the preset speed difference range approaches zero. If the motor torque coefficient corresponding to a first preset speed difference range is zero, then the first preset speed difference range is a speed difference range where the difference between the engine speed and the maximum speed is fallen into when the engine speed is greater than or equal to the maximum speed.

For example, taking that the difference is obtained by subtracting the engine speed from the maximum speed as an example, in a possible implementation, the engine is in the fault-free condition, and the preset coefficient correspondence relation may be shown in Table 1,

**Table 1**

| Preset Speed Difference Range | (300 rpm, 200 rpm) | (200 rpm, 100 rpm) | (100 rpm, 50 rpm) | (50 rpm, 0 rpm) | 0 rpm or below |
|---|---|---|---|---|---|
| Motor Torque Coefficient | 0.8 | 0.5 | 0.3 | 0.1 | 0 |

In another possible implementation, the engine is in a fault condition, and the corresponding relationship between the preset coefficients can be shown in Table 2.

**Table 2**

| Preset Speed Difference Range | (500 rpm, 300 rpm) | (300 rpm, 200 rpm) | (200 rpm, 100 rpm) | (100 rpm, 50 rpm) | 0 rpm or below |
|---|---|---|---|---|---|
| Motor Torque Coefficient | 0.8 | 0.6 | 0.4 | 0.2 | 0 |

It can be seen from the above Table 1 and/or Table 2 that, in case that the difference obtained by subtracting the engine speed from the maximum speed is smaller than or equal to the preset speed difference threshold, different preset speed difference ranges correspond to different motor torque coefficients, and the motor torque coefficient shows a gradient decreasing trend. The closer the engine speed is to the maximum speed that the engine can withstand, the smaller the motor torque coefficient is. The output torque of the motor is stopped when the engine speed is greater than or equal to the maximum speed that the engine can withstand.

For the case where the difference is the difference obtained by subtracting the maximum speed from the engine speed, references can be made to the above, which will not be described again here.

In step S104, a target output torque of a motor of the vehicle according to the motor torque coefficient corresponding to the target speed difference range, to reduce the target output torque.

Here, the target output torque includes a maximum output torque of the motor, or alternatively, a distributed torque of the motor. The distributed torque of the motor represents the output torque of the motor indicated by the vehicle. For example, the distributed torque may be an output torque that the vehicle instructs the motor to externally respond according to the degree of opening of the accelerator pedal, a vehicle speed and a driving mode after the accelerator pedal is depressed by a driver, so that the vehicle can quickly respond to the driver's driving intentions.

In a possible implementation, the product of the motor torque coefficient and the maximum output torque of the motor may be taken as the adjusted maximum output torque when the target output torque includes the maximum output torque of the motor.

Here, in case that the difference between the engine speed and the maximum speed meets the preset condition and the engine speed is smaller than the maximum speed, the motor torque coefficient decreases in a gradient as the engine speed increases, and then the limit on the maximum output torque of the motor is gradually increased to prevent the engine speed from being driven up and continuing to rise.

In another possible implementation, the product of the motor torque coefficient and the distributed torque of the motor may be taken as the adjusted output torque when the target output torque includes the distributed torque of the motor.

The product of the motor torque coefficient and the distributed torque of the motor is taken as the adjusted distributed torque of the motor after the corresponding motor torque coefficient is obtained according to the engine speed, which can reduce the output torque actually required for the motor and avoid the engine speed being driven and continuing to rise.

By means of the above method, the output torque of the motor is limited to various degrees according to the speed of the engine when the difference between the engine speed and the maximum speed meets the preset condition, and the control of the output torque of the motor is gradually increased, thus, the output torque of the motor is ultimately controlled without causing the speed of the engine to further increase, thereby ensuring that the hardware of the engine is not damaged, which is conducive to prolonging the service life of the engine and improving the user's experience.

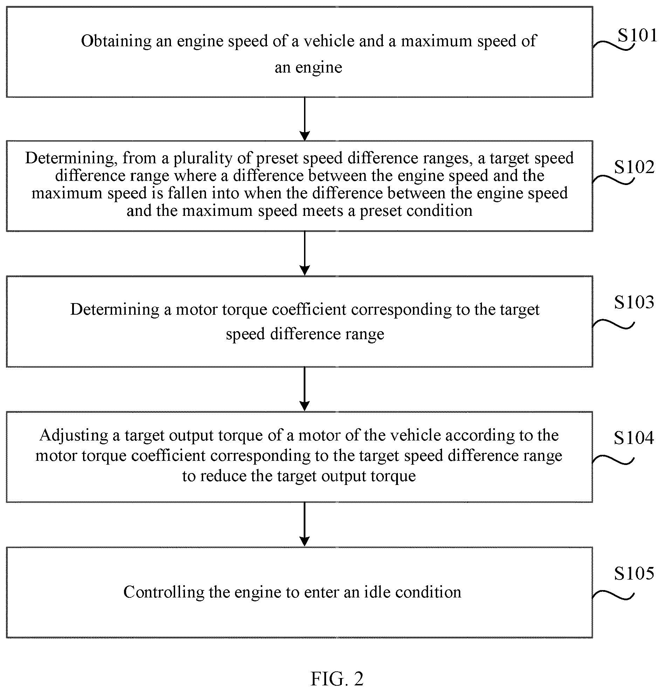

In another embodiment of the present invention, a condition of the engine may also be controlled while limiting the output torque of the motor, as shown in FIG. 2. Based on the steps shown in FIG. 1, the present invention may also include the following step S105.

In step S105, the engine controlled to enter an idle condition.

In this step, when the output torque of the motor is limited, to further prevent the possible increase in speed of the engine, for example, the engine is controlled to enter the idle condition in case that the active fuel cutoff protection strategy of the vehicle fails, thereby the engine will no longer receive the torque output demand sent by the vehicle, so that the speed can be controlled at a lower level.

In this way, it can be further ensured that the engine speed is controlled within the maximum speed range that the engine can withstand, which avoids the situation where the engine speed exceeds the maximum speed that may occur under some special circumstances, and is conducive to strengthening limits on engine speed.

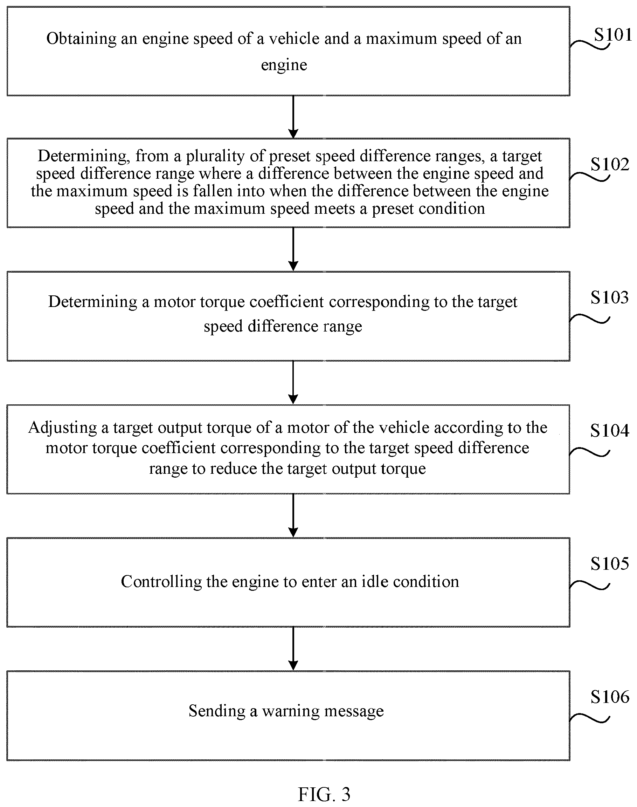

Based on the steps shown in FIG. 2, a warning message may also be sent when the engine speed exceeds a preset speed threshold, as shown in FIG. 3.

In step S106, a warning message is sent.

This warning message is used to indicate an abnormality in the engine speed.

In this way, the driver can be alerted when the difference between the engine speed and the maximum speed meets the preset condition, to prompt the driver to shift gears or reduce the degree of depression of the accelerator pedal.

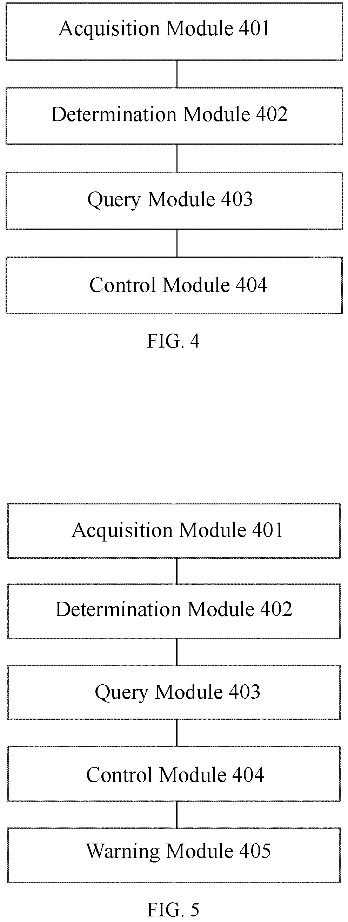

FIG. 4 is a vehicle control device provided by the present invention. As shown in FIG. 4, the vehicle control device includes: an acquisition module 401, a determination module 402, a query module 403 and a control module 404

The acquisition module 401 is configured to obtain an engine speed of a vehicle and a maximum speed of an engine;

The determination module 402 is configured to determine, from a plurality of preset speed difference ranges, a target speed difference range where a difference between the engine speed and the maximum speed is fallen into, when the difference between the engine speed and the maximum speed meets a preset condition.

The query module 403 is configured to determine a motor torque coefficient corresponding to the target speed difference range, where different preset speed difference ranges correspond to different motor torque coefficients.

The control module 404 is configured to adjust a target output torque of a motor of the vehicle according to the motor torque coefficient corresponding to the target speed difference range to reduce the target output torque, and the target output torque includes a maximum output torque of the motor, or a distributed torque of the motor.

The query module 403 is configured to obtain the motor torque coefficient corresponding to the engine speed through a preset coefficient correspondence relationship. The preset coefficient correspondence relationship includes motor torque coefficients corresponding to different preset speed difference ranges.

In case that the engine speed is smaller than the maximum speed, the interval of the preset speed difference range approaches zero as the engine speed increases. The motor torque coefficient corresponding to the preset speed difference range decreases as the interval of the preset speed difference range approaches zero. The motor torque coefficient corresponding to a first preset speed difference range is zero, and the first preset speed difference range is the speed difference range where the difference between the engine speed and the maximum speed is fallen into when the engine speed is greater than or equal to the maximum speed.

The control module 404 is also configured to control the engine to enter an idle condition.

By limiting the output torque of the motor to various degrees according to the difference between the engine speed and the maximum speed when the difference between the engine speed and the maximum speed meets the preset condition, the control of the output torque of the motor is gradually increased, thus, the output torque of the motor is ultimately controlled without causing the speed of the engine to further increase. In addition, the engine is controlled to be in an idle condition which avoids the situation of engine speed exceeding the maximum speed that may occur under some special circumstances. Thereby, it is ensured that the hardware of the engine will not be damaged, which is conducive to prolonging the service life of the engine and improving the user's experience.

In addition, on the basis of the above device, as shown in FIG. 5, the vehicle control device also includes a warning module 405 which is configured to send a warning message, the warning message is used to indicate an abnormality in the engine speed.

In this way, the driver can be alerted when the difference between the engine speed and the maximum speed meets the preset condition, to prompt the driver to shift gears or reduce the degree of depression of the accelerator pedal, which is beneficial to further avoid affecting the service life of the engine.

Regarding the devices, the specific manner in which each module performs operations has been described in detail in the relevant method, and will not be elaborated here.

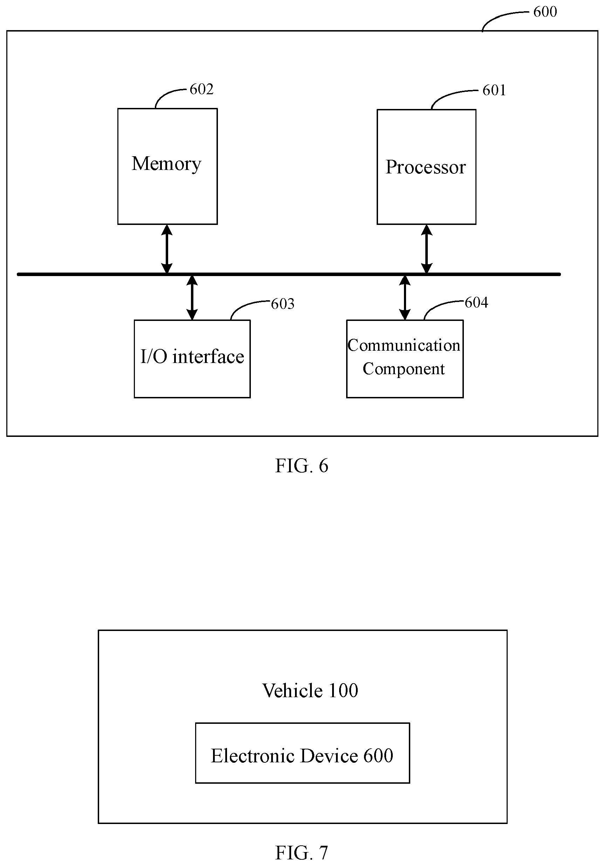

FIG. 6 is a block diagram of an electronic device 600. As shown in FIG. 6, the electronic device 600 may include: a processor 601 and a memory 602. The electronic device 600 may also include one or more of an input/output (I/O) interface 603, and a communication component 604.

Here, the processor 601 is configured to control the overall operation of the electronic device 600 to complete all or part of the steps in the above-mentioned vehicle control method. The memory 602 is configured to store various types of data to support operations on the electronic device 600. These data may include, for example, instructions for any application program or method operating on the electronic device 600, as well as application program-related data. The memory 602 may be implemented by any type of volatile or nonvolatile storage device or a combination thereof, such as a static random access memory (Static Random Access Memory, SRAM for short), an electrically erasable programmable read-only memory ( Electrically Erasable Programmable Read-Only Memory (EEPROM for short), an erasable programmable read-only memory (Erasable Programmable Read-Only Memory, EPROM for short), a programmable read-only memory (Programmable Read-Only Memory, PROM for short), a read-only memory (Read-Only Memory, ROM for short), a magnetic memory, a flash memory, a magnetic disk or an optical disk. The communication component 604 is configured for wired or wireless communication between the electronic device 600 and other devices. Wireless communication, such as Wi-Fi, Bluetooth, a near field communication (Near Field Communication, NFC for short), 2G, 3G, 4G, NB-IOT, eMTC, or other 5G, etc., or a combination of one or more of them, which is not limited here. Therefore, the corresponding communication component 604 may include: Wi-Fi module, Bluetooth module, NFC module, etc.

The electronic device 600 may be are implemented as one or more an application specific integrated circuit, (Application Specific Integrated Circuit, ASIC for short), a digital signal processor (Digital Signal Processor, DSP for short), a digital signal processing device (Digital Signal Processing Device, DSPD for short), a programmable logic device (Programmable Logic Device, PLD for short), a field programmable gate array (Field Programmable Gate Array, FPGA for short), a controller, a microcontroller, a microprocessor or other electronic components, for executing the above vehicle control method.

A computer-readable storage medium including program instructions is also provided. The program instructions when executed by a processor, enables the steps of the vehicle control method to be implemented. For example, the computer-readable storage medium may be the above-mentioned memory 602 including program instructions, and the above-mentioned program instructions may be executed by the processor 601 of the electronic device 600 to complete the above-mentioned vehicle control method.

A computer program product is also provided, the computer program product including a computer program that is executable by a programmable device. The computer program having a code part that is configured to, when executed by the programmable device, execute the above vehicle control method.

FIG. 7 shows a vehicle 100 provided by the present invention. As shown in FIG. 7, the vehicle 100 includes the above-mentioned electronic device 600.

## Claims

1. A vehicle control method, comprising:
(S101) obtaining a current engine speed of a vehicle and a maximum speed of an engine;
(S102) determining, from a plurality of preset speed difference ranges, a target speed difference range where a difference between the engine speed and the maximum speed is fallen into when the difference obtained by subtracting the engine speed from the maximum speed is smaller than or equal to a first preset speed difference threshold, or the difference obtained by subtracting the maximum speed from the engine speed is greater than or equal to a second preset speed difference threshold;
(S103) determining a motor torque coefficient corresponding to the target speed difference range, wherein different preset speed difference ranges correspond to different motor torque coefficients; and
(S104) adjusting a target output torque of a motor of the vehicle according to the motor torque coefficient corresponding to the target speed difference range to reduce the target output torque.

2. The vehicle control method according to claim 1, wherein an interval of the preset speed difference range approaches zero as the engine speed increases when the engine speed is smaller than the maximum speed.

3. The vehicle control method according to claim 1, wherein the motor torque coefficient decreases as an interval of the preset speed difference range approaches zero.

4. The vehicle control method according to claim 1, wherein the motor torque coefficient corresponding to a speed difference range where the difference between the engine speed and the maximum speed is fallen into is zero when the engine speed is greater than or equal to the maximum speed.

5. The vehicle control method according to claim 1, wherein the target output torque comprises a maximum output torque of the motor, or a distributed torque of the motor.

6. The vehicle control method according to claim 1, wherein, when the difference between the engine speed and the maximum speed meets the preset condition, the vehicle control method further comprises:
(S105) controlling the engine to enter an idle condition.

7. The vehicle control method according to any one of claims 1 to 5, wherein, when the difference between the engine speed and the maximum speed meets the preset condition, the vehicle control method further comprises:
(S106) sending a warning message, wherein the warning message is used to indicate an abnormality in the engine speed.

8. A computer-readable storage medium on which a computer program is stored, wherein, the program, when executed by a processor, enables steps of the method according to any one of claims 1-8 to be implemented.

9. An electronic device (600), wherein comprising:
a memory (602) on which a computer program is stored;
a processor (601), configured to execute the computer program in the memory (602) to implement steps of the method according to any one of claims 1-7.

## Patentansprüche

1. Fahrzeug-Steuerverfahren, aufweisend:
(S101) Ermitteln einer aktuellen Motordrehzahl eines Fahrzeugs und einer Maximaldrehzahl eines Motors;
(S102) Bestimmen, aus einer Mehrzahl voreingestellter Drehzahldifferenzbereiche, eines Ziel-Drehzahldifferenzbereichs, in den eine Differenz zwischen der Motordrehzahl und der Maximaldrehzahl fällt, wenn die Differenz aus Maximaldrehzahl minus Motordrehzahl kleiner als oder gleich einer ersten voreingestellten Drehzahldifferenzschwelle ist oder die Differenz aus Motordrehzahl minus Maximaldrehzahl größer als oder gleich einer zweiten voreingestellten Drehzahldifferenzschwelle ist;
(S103) Bestimmen eines Elektromotor-Drehmomentkoeffizienten, der dem Ziel-Drehzahldifferenzbereich entspricht, wobei unterschiedliche voreingestellte Drehzahldifferenzbereiche unterschiedlichen Elektromotor-Drehmomentkoeffizienten entsprechen; und
(S104) Anpassen eines Ziel-Ausgangsdrehmoments eines Elektromotors des Fahrzeugs gemäß dem dem Ziel-Drehzahldifferenzbereich entsprechenden Elektromotor-Drehmomentkoeffizienten, um das Ziel-Ausgangsdrehmoment zu verringern.

2. Fahrzeug-Steuerverfahren nach Anspruch 1, wobei eine Intervallbreite des voreingestellten Drehzahldifferenzbereichs gegen Null geht, wenn die Motordrehzahl zunimmt, sofern die Motordrehzahl kleiner als die Maximaldrehzahl ist.

3. Fahrzeug-Steuerverfahren nach Anspruch 1, wobei der Elektromotor-Drehmomentkoeffizient abnimmt, wenn eine Intervallbreite des voreingestellten Drehzahldifferenzbereichs gegen Null geht.

4. Fahrzeug-Steuerverfahren nach Anspruch 1, wobei der dem Drehzahldifferenzbereich entsprechende Elektromotor-Drehmomentkoeffizient, in den die Differenz zwischen der Motordrehzahl und der Maximaldrehzahl fällt, Null ist, wenn die Motordrehzahl größer als oder gleich der Maximaldrehzahl ist.

5. Fahrzeug-Steuerverfahren nach Anspruch 1, wobei das Ziel-Ausgangsdrehmoment ein maximales Ausgangsdrehmoment des Elektromotors aufweist oder ein verteiltes Drehmoment des Elektromotors aufweist.

6. Fahrzeug-Steuerverfahren nach Anspruch 1, wobei, wenn die Differenz zwischen der Motordrehzahl und der Maximaldrehzahl eine voreingestellte Bedingung erfüllt, das Fahrzeug-Steuerverfahren ferner aufweist:
(S105) Steuern des Motors, einen Leerlaufzustand einzunehmen.

7. Fahrzeug-Steuerverfahren nach einem der Ansprüche 1 bis 5, wobei, wenn die Differenz zwischen der Motordrehzahl und der Maximaldrehzahl eine voreingestellte Bedingung erfüllt, das Fahrzeug-Steuerverfahren ferner aufweist:
(S106) Senden einer Warnmeldung, wobei die Warnmeldung dazu bestimmt ist, eine Unregelmäßigkeit der Motordrehzahl anzuzeigen.

8. Computerlesbares Speichermedium, auf dem ein Computerprogramm gespeichert ist, wobei das Programm, wenn es von einem Prozessor ausgeführt wird, die Durchführung der Schritte des Verfahrens nach einem der Ansprüche 1 bis 8 ermöglicht.

9. Elektronische Vorrichtung (600), aufweisend:
einen Speicher (602), auf dem ein Computerprogramm gespeichert ist;
einen Prozessor (601), der dazu eingerichtet ist, das Computerprogramm im Speicher (602) auszuführen, um die Schritte des Verfahrens nach einem der Ansprüche 1 bis 7 durchzuführen.

## Revendications

1. Procédé de commande de véhicule, comprenant :
(S101) l'obtention d'une vitesse de moteur à combustion courante d'un véhicule et d'une vitesse maximum d'un moteur à combustion ;
(S102) la détermination, parmi une pluralité de plages de différence de vitesse prédéfinies, d'une plage de différence de vitesse cible à l'intérieur de laquelle une différence entre la vitesse de moteur à combustion et la vitesse maximum tombe lorsque la différence qui est obtenue en soustrayant la vitesse de moteur à combustion de la vitesse maximum est inférieure ou égale à un premier seuil de différence de vitesse prédéfini ou lorsque la différence qui est obtenue en soustrayant la vitesse maximum de la vitesse de moteur à combustion est supérieure ou égale à un second seuil de différence de vitesse prédéfini ;
(S103) la détermination d'un coefficient de couple de moteur qui correspond à la plage de différence de vitesse cible, dans lequel les plages de différence de vitesse prédéfinies différentes correspondent à des coefficients de couple de moteur différents ; et
(S104) le réglage d'un couple de sortie cible d'un moteur du véhicule conformément au coefficient de couple de moteur qui correspond à la plage de différence de vitesse cible afin de réduire le couple de sortie cible.

2. Procédé de commande de véhicule selon la revendication 1, dans lequel un intervalle de la plage de différence de vitesse prédéfinie s'approche de zéro dès lors que la vitesse de moteur à combustion augmente lorsque la vitesse de moteur à combustion est inférieure à la vitesse maximum.

3. Procédé de commande de véhicule selon la revendication 1, dans lequel le coefficient de couple de moteur diminue dès lors qu'un intervalle de la plage de différence de vitesse prédéfinie s'approche de zéro.

4. Procédé de commande de véhicule selon la revendication 1, dans lequel le coefficient de couple de moteur qui correspond à une plage de différence de vitesse à l'intérieur de laquelle la différence entre la vitesse de moteur à combustion et la vitesse maximum tombe est égal à zéro lorsque la vitesse de moteur à combustion est supérieure ou égale à la vitesse maximum.

5. Procédé de commande de véhicule selon la revendication 1, dans lequel le couple de sortie cible comprend un couple de sortie maximum du moteur ou un couple réparti du moteur.

6. Procédé de commande de véhicule selon la revendication 1, dans lequel, lorsque la différence entre la vitesse de moteur à combustion et la vitesse maximum satisfait la condition prédéfinie, le procédé de commande de véhicule comprend en outre :
(S105) la commande du moteur à combustion pour qu'il entre dans une condition de ralenti.

7. Procédé de commande de véhicule selon l'une quelconque des revendications 1 à 5, dans lequel, lorsque la différence entre la vitesse de moteur à combustion et la vitesse maximum satisfait la condition prédéfinie, le procédé de commande de véhicule comprend en outre :
(S106) l'envoi d'un message d'avertissement, dans lequel le message d'avertissement est utilisé pour indiquer une anomalie au niveau de la vitesse de moteur à combustion.

8. Support de stockage lisible par ordinateur sur lequel un programme d'ordinateur est stocké, dans lequel le programme, lorsqu'il est exécuté par un processeur, permet la mise en œuvre d'étapes du procédé selon l'une quelconque des revendications 1 à 8.

9. Dispositif électronique (600), comprenant :
une mémoire (602) sur laquelle un programme d'ordinateur est stocké ; et
un processeur (601) configuré pour exécuter le programme d'ordinateur dans la mémoire (602) afin de mettre en œuvre des étapes du procédé selon l'une quelconque des revendications 1 à 7.
